(19) Europäisches Patentamt
European Patent Office
Office européen des brevets

(11) Numéro de publication: **0 108 698**
**B1**

# (12) FASCICULE DE BREVET EUROPÉEN

(45) Date de publication du fascicule du brevet: **14.10.87**

(51) Int. Cl.⁴: **C 01 G 51/00**, C 07 C 51/10

(21) Numéro de dépôt: **83420169.1**

(22) Date de dépôt: **28.10.83**

(54) **Procédé d'obtention de cobalttétracarbonylates alcalinoterreax et de leurs solutions et leur application à la carbonylation de composés à groupes halogénométhyle.**

(30) Priorité: **05.11.82 FR 8218729**
**13.09.83 FR 8314732**

(43) Date de publication de la demande:
**16.05.84 Bulletin 84/20**

(45) Mention de la délivrance du brevet:
**14.10.87 Bulletin 87/42**

(84) Etats contractants désignés:
**AT BE CH DE FR GB IT LI NL SE**

(56) Documents cité:
**FR-A-2 134 702**
**FR-A-2 297 200**
**FR-A-2 429 772**
**GB-A-2 079 748**
**US-A-4 097 272**

**Le dossier contient des informations techniques présentées postérieurement au dépôt de la demande et ne figurant pas dans le présent fascicule.**

(73) Titulaire: **RHONE- POULENC CHIMIE, 25, quai Paul Doumer, F-92408 Courbevoie Cédex (FR)**

(72) Inventeur: **Gauthier- Lafaye, Jean, 21, rue Duguesclin, F-69006 Lyon (FR)**
Inventeur: **Perron, Robert, La Pecolière, F-69390 Charly (FR)**

(74) Mandataire: **Rioufrays, Roger, RHONE- POULENC INTERSERVICES Service Brevets Chimie Centre de Recherches de Saint- Fons B.P. 62, F-69192 Saint- Fons Cédex (FR)**

EP 0 108 698 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention a pour objet un procédé d'obtention de sels alcalino-terreux de l'hydrure de tetracarbonylcobalt et de leurs solutions.

Les cobalttétracarbonylates alcalins ou alcalino-terreux qui répondent à la formule M $[Co(CO)_4]_n$ dans laquelle M représente un métal alcalin ou alcalino-terreux et n est 1 ou 2 sont des composés connus utilisés comme catalyseurs de nombreuses réactions faisant intervenir l'oxyde de carbone. Ainsi par exemple les cobalttétracarbonylates alcalins ou alcalino-terreux sont mis en oeuvre comme catalyseurs de carbonylation d'halogénures d'alkyle, de cycloalkyle ou d'aryle pour la préparation d'acides organiques ou de leurs dérivés et notamment d'esters. Ainsi on a décrit dans le brevet français 1.313.360 un procédé préparation de dérivés d'acides carboxyliques, et notamment d'esters, par cabonylation d'un halogénure organique par l'oxyde de carbone en présence de sels de l'hydrure de cobalttétracarbonyle et en particulier de sels alcalins ou alcalino-terreux de cet hydrure et de composés à hydrogène labile (eau, alcools, mercaptans, amines primaires ou secondaires) en milieu basique. Ce procédé convient tout particulièrement bien à la préparation des acides phénylacétiques et de leurs dérivés. Dans le brevet français 70/26.593 publié sous le No. 2.055.331 on a proposé de préparer l'acide phénylacétique par carbonylation du chlorure de benzyle par l'oxyde de carbone en présence de cobalttétracarbonylate de calcium préparé par réaction d'un sel de cobalt avec l'oxyde de carbone en présence de chaux, d'un alliage fer/manganèse et de promoteurs soufrés, en milieu hydrométhanolique. Un procédé analogue a été décrit pour la préparation de l'acide α-thiènylacétique (cf. demande de brevet français No. 78/07.980 publiée sous le No. 2.420.534). Enfin on a proposé dans le brevet français No. 75/0.0533 publié sous le No. 2.297.200 et son addition No. 75/29.459 un procedé de double carbonylation des halogénures d'arylméthyle en acide arylpyruvique par l'oxyde de carbone en présence d'une base alcalino-terreuse et d'un sel alcalin ou alcalino-terreux de l'hydrure de cobalttétracarbonyle, sous une pression d'oxyde de carbone comprise entre 5 et 200 bars. Des variantes de ce procédé ont été décrites dans le brevet américain No. 4.351.952 et dans la demande de brevet français No. 79/16170 publiée sous le No. 2.429.772.

Outre leur emploi comme catalyseurs de carbonylation les cobalttétracarbonylates alcalins cu alcalino-terreux peuvent encore être utilisés pour la préparation du dicobaltoctacarbonyle par décomposition de l'hydrure de cobalttétracarbonyle libéré par acidification des solution de cobalttétracarbonylates alcalins ou alcalino-terreux. Ils servent également d'intermédiaires pour la préparation d'autres sels métalliques tels que les cobalttétracarbonylates d'argent, de zinc, de mercure et de cadmium utilisés comme catalyseurs de carbonylation des alcools en esters (cf. brevet anglais No. 715.515). En définitive les cobalttétracarbonylates alcalins ou alcalino-terreux présentent un intérêt industriel considérable en synthèse organique et c'est la raison pour laquelle s'est rapidement posé le problème de la mise au point d'un procédé de préparation de ces composés facile à mettre en oeuvre à l'échelle industrielle. Quelle que soit la destination des cobalttétracarbonylates alcalins ou alcalino-terreux (préparation de dicobaltoctacarbonyle ou emploi direct comme catalyseur dans les réactions de carbonylation rappelées ci-avant) l'industrie est à la recherche d'un procédé de préparation des cobalttétracarbonylate alcalins ou alcalino-terreux à partir de sels mineraux de cobalt (+2) courants et d'oxyde de carbone, à pression normale ou sous une pression modérée d'oxyde de carbone et conduisant le cas échéant à des solutions de cobalttétracarbonylates alcalins ou alcalino-terreux directement utilisables industriellement pour la mise en oeuvre des procédés de carbonylation. De nombreuses méthodes ont été proposées sans apporter de solution satisfaisante à ce problème. Ainsi, dès 1936, G. W. et al, J. Am. Chem. Soc. 58 page 2160 et suivantes (1936), ont décrit un procédé de préparation du cobalttétracarbonylate de potassium par réaction du nitrate de cobalt avec l'oxyde de carbone à pression normale en présence de divers adjuvants favorisant l'absorption de l'oxyde de carbone tels que le cyanure de potassium, la cystéïne et l'acide tartrique. L'emploi de cyanure de potassium a été repris par de nombreux auteurs par la suite, cf.: A. A. BLANCHARD et al, J. Am. Chem. Soc. 62 1192-1193 (1940); F. SEEL, Z. Anorg. Chem. 269 40-42 (1952); Y. TAKEGAMI et al, Bull. Chem. Soc. Jap. 37 181-182 (1964); R. J. CLARK et al, J. Organomet. Chem. 11 637-840 (1968). Bien que ce procédé ait le mérite de pouvoir être conduit à pression atmosphérique, il ne peut être utilisé industriellement en raison de la faible vitesse de la réaction et/ou de la faiblesse des rendemants. Par la suite W. HIEBER et al, Z. Anorg. Chem. 269 308-316 (1952) ont proposé un procédé de laboratoire amélioré de synthèse des cobalttétracarbonylates de mercure et d'argent mettant en oeuvre une préparation intermédiaire de l'ion tétracarbonylate $Co(CO)_4^-$ par réaction de l'oxyde de carbone à pression normale avec le nitrate de cobalt hexahydraté et le dithionite de sodium ($Na_2S_2O_4$) dans une solution aqueuse ammoniacale. En raison des conditions auxquelles il fait appel ce procédé n'a d'intérêt que pour la préparation au laboratoire des cobalttétracarbonylates d'argent et de mercure. En effet l'obtention de l'ion cobalttétracarbonylate $Co(CO)_4^-$ est subordonnée à la mise en oeuvre d'une quantité stoechiométrique de dithionite de sodium agissant comme réducteur du cobalt [cf. W. HIEBER et al, Z. Anorg. Chem. 269 292-307 (1952)]. Par ailleurs les solutions ammoniacales de cobalttétracarbonylate d'ammonium ainsi obtenues ne peuvent être utilisées directement pour certaines des réactions de carbonylation citées plus haut, telles que la préparation des acide thiénylacétique, phénylacétique et phénylpyruvique qui requièrent l'utilisation de bases alcalines ou alcalino-terreuses en milieu aqueux ou hydroalcoolique. Pour pallier les inconvénients propres au procédé de HIEBER et al, loc. cit., on a proposé dans les brevets et demandes de brevet français No. 70/26.593, No. 78/7980 et No. 73/29.840 de préparer des solutions aqueuses, alcooliques ou hydroalcooliques de cobelttétracarbonylates alcalins ou alcalino-terreux par réaction d'un sel de cobalt (chlorure, sulfure ou

bromure) avec l'oxyde de carbone, en milieu alcoolique ou hydroalcoolique, en présence d'un hydroxyde alcalin ou alcalino-terreux, d'une quantité catalytique d'un composé soufré (dithionite de sodium, sulfure de sodium et thiosulfate de sodium) et d'un alliage fer/manganèse. Ce procédé a pour inconvénient essentiel le recours à un élément complémentaire, l'alliage fer/manganèse dont l'utilisation sous forme de poudre complique le procédé. Par ailleurs l'obtention de bons résultats est liée à la mise en oeuvre de quantités importantes de manganèse de l'ordre de 1 atome-gramme de métal par mole de sel de cobalt, ce qui rend ce procédé peu attrayant du point de vue économique.

Il est également connu d'après le brevet FR-A-2 134 702 un procédé d'extraction de cobalt à partir de solutions ou suspensions aqueuses ammoniacales de sels de cobalt réductibles contenant en outre un sel d'ammonium par mise en contact de ces solutions ou suspensions avec l'oxyde de carbone sous une pression de 7 à 70 bars, en présence:
- d'une base forte (soude, potasse, carbonates alcalins)
- d'un ligand tel que les sulfures en quantité catalytique.

Ce procédé ne permet pas d'obtenir de solutions de cobalt tétracarbonylates directement utilisables pour des réactions de carbonylation.

En définitive, aucun des procédés de préparation des cobalttétracarbonylates décrits dans l'art antérieur n'a résolu de manière satisfaisante le problème de la préparation industrielle des cobalttétracarbonylates alcalins ou alcalino-terreux. La présente invention a précisément pour objet un procédé de préparation des cobalttétracarbonylates alcalino-terreux facilement utilisable au stade industriel.

On a en effet constaté de façon surprenante qu'il est possible de préparer les cobalttétracarbonylates alcalino-terreux à partir de sels de cobalt (+2) sous des pressions modérées d'oxyde de carbone en présence de dérivés soufrés sans recourir à l'emploi d'alliages fer/manganèse.

Plus spécifiquement, la présente invention a pour objet un procédé de préparation des cobalttétracarbonylates alcalino-terreux par réaction en milieu liquide d'un dérivé de cobalt (+2) avec l'oxyde de carbone en présence d'une base minérale caractérisé en ce que la base minérale est prise dans le groupe formé par les hydroxydes et les bicarbonates alcalino-terreux et que l'on opère en présence d'au moins un dérivé du soufre qui comporte au moins un atome de soufre dont le degré d'oxydation est inférieur ou égal à + 3, dans un milieu constitué par l'eau, un alcool, un éther ou un mélange d'eau et d'un alcool ou d'un éther.

Selon l'invention les cobalttétracarbonylates alcalino-terreux sont obtenus sous forme de solutions aqueuses ou aquoorganiques directement utilisables, par exemple pour la carbonylation des composés à groupes chlorométhyle.

A la lumière de l'art antérieur rappelé ci-avant, il apparaît particulièrement inattendu d'obtenir des cobalttétracarbonylates alcalinc-terreux par réaction des dérivés du cobalt (+2) avec l'oxyde de carbone en absence d'alliage fer-manganèse et sans avoir à recourir à l'emploi d'une quantité stoechiométrique de dérivé soufré.

Comme exemples de composés du soufre comportant au moins un atome de soufre dont le degré d'oxydation est inférieur ou égal à + 3, on peut citer les sulfures, les polysulfures, les thiosulfates, les dithionites, les polythionates et les mercaptans. On fait appel de préférence à des sels de métaux alcalins cu alcalino-terreux.

Parmi les composés soufrés utilisés comme catalyseurs dans le procédé selon l'invention on peut citer à titre d'exemples non limitatifs le sulfure de sodium, le sulfure de potassium, le thiosulfate de sodium ($Na_2S_2O_3$, 5 $H_2O$), le thiosulfate de potassium, le tétrationate de sodium ($Na_2S_4O_6$, 2 $H_2O$), l'hexathionate de sodium ($Na_2S_2O_6$, 2 $H_2O$), le dithionite de sodium, le dithionite de potassium, le méthylmercaptan, l'éthylmercaptan, le thiophénol. On peut, sans sortir du cadre de la présente invention, mettre en oeuvre deux ou plus de deux dérivés du soufre. On peut citer par exemple les associations sulfure de sodium/thiosulfate de sodium; sulfure de sodium/dithionite de sodium.

La quantité de composé soufré exprimée en mole par atome-gramme de cobalt peut être comprise entre de larges limites. Ainsi cette quantité peut varier de 0,01 à 1 mole de composé soufré par atome-gramme de cobalt. Toutefois, et ceci constitue un des avantages du procédé selon l'invention, il n'est pas nécessaire de mettre en oeuvre plus de 0,6 mole de composé soufré par atome-gramme de cobalt. De préference cette quantité est comprise entre 0,05 et 0,5 mole par atome-gramme de cobalt.

Comme dérivés du cobalt (+2) auxquels on peut faire appel pour mettre en oeuvre le procédé selon l'invention, on peut citer l'oxyde de cobalt, l'hydroxyde de cobalt, les sels des acides minéraux tels que le carbonate de cobalt, le nitrate, le sulfate, les halogénures (chlorure, iodure, bromure) de cobalt, les sels des acides carboxyliques aliphatiques, cycloaliphatiques ou aromatiques tels que l'acétate de cobalt, l'octanoate de cobalt, le benzoate de cobalt.

On pourrait évidemment, sans sortir du cadre de la présente invention, mettre en oeuvre des sels de cobalt d'autres acides carboxyliques moins courants mais celà ne se traduirait par aucun avantage particulier. Naturellement les sels de cobalt peuvent être utilisés sous leur forme hydratée. On fait appel de préférence aux composés les plus solubles dens le milieu réactionnel tels que les halogénures, nitrate et acétate de cobalt.

Parmi les bases alcalino-terreuses qui peuvent être utilisées pour la mise en oeuvre du procédé selon l'invention, on peut citer les hydroxydes de calcium, de baryum et de magnésium. Les hydroxydes alcalino-terreux conviennent tout particulièrement bien en raison de leur faible solubilité dars le milieu réactionnel; ils peuvent en effet être séparés aisément de la solution réactionnelle par simple filtration. Lorsqu'on opère en milieu aqueux ou aquoorganique, les sulfures alcalins facilement hydrolysables peuvent jouer le double rôle de

base et de dérivé soufré.

De la même façon les hydroxydes alcalino-terreux pourraient être engendrés dans le milieu à partir des oxydes. La quantité de base est de préférence au moins égale à celle introduisant dans le milieu réactionnel le nombre d'ions $OH^-$ exigé par la stoechiométrie de la réaction conformément à l'équation suivante:

$$4\,Co^{++} + 12\,OH^- + 22\,CO \rightarrow 4\,Co(CO)_4^- + 6\,CO_2 + 6\,H_2O.$$

Par conséquent suivant la nature de la base, cette quantite exprimée en moles par ion-gramme de cobalt est de préférence au moins égale à environ 1,5 mole ou à environ 3 moles par ion-gramme de cobalt. On pourrait évidenment employer moins que la quantité stoechiométrique de base mais cela se traduirait par une transformation incomplète du cobalt. Il n'y a pas de limite supérieure critique de la quantité de base et on peut donc opérer avec un large excés de cette dernière par rapport à la stoechiométrie. Dans la pratique, il est préférable de ne pas mettre en oeuvre plus de 4 moles de base par ion-gramme de cobalt.

Lorsque la réaction est conduite dans un alcool ou en milieu hydroalcoolique, l'alcool est choisi parmi les composés mono- ou polyhydroxylés aliphatiques, linéaires ou ramifiés, saturés, comportant de 1 à 10 atomes de carbone; les alcools cycloaliphatiques saturés comportant de 5 à 12 atomes de carbone; les alcools arylaliphatiques. A titre d'exemples spécifiques, on peut citer: le métranol, l'éthanol; le propanol-1; l'isopropanol; l'isobutanol; le t-butanol; le diméthyl-2,2 propanol-1; le butanol-1; le butanol-2; le méthyl-3 butanol-1; le méthyl-2 butanol-2; le méthyl-3 butanol-2; le pentanol-1; le pentanol-2; le pentanol-3; l'éthylèneglycol; le propanediol-1,2; le butanediol-1,4; le cyclopentanol; le cyclohexanol; l'alcool benzylique; l'alcool β-phényléthylique.

On fait appel de préférence aux alcanols inférieurs comportant de 1 à 4 atomes de carbone. Lorsqu'on utilise un mélange eau/alcool sa composition n'est pas critique et peut varier dans de larges limites. Ainsi les solutions hydroalcooliques peuvent comporter de 5 à 95 % en volume d'eau.

Comme éthers on peut utiliser ceux dérivés des alcools et polyols précités ou d'autres éthers d'alcools aliphatiques ou cycloaliphatiques et des éthers cycliques. On peut citer en particulier les oxydes de méthyle, d'éthyle, de méthyle et d'éthyle, les oxydes de propyle, d'isopropyle, de méthyle et d'isopropyle; de butyle, l'oxyde de méthyle et d'isobutyle; l'éther diméthylique de l'éthylèneglycol; l'éther diméthylique du diéthylèneglycol; l'éther monoéthylique, monométhylique, monobutylique du diéthylèneglycol; des éthers cycliques tels que le dioxanne et le tétrahydrofuranne (THF).

Parmi les éthers on a recours de préférence à ceux qui sont miscibles â l'eau tels que l'oxyde de méthyle, l'oxyde de méthyle et de t-butyle, l'oxyde d'éthyle et de propyle, l'oxyde de méthyle et d'éthyle, l'oxyde de méthyle et de propyle, le diméthoxy-1,2 éthane, l'éther monométhylique du diéthylèneglycol, l'éther monoéthylique du diéthylèneglycol, l'éther monobutylique du diéthylèneglycol, l'éther diéthylique du diéthylèneglycol, le dioxanne et le THF.

Lorsqu'on a recours à un mélange eau/éther miscible à l'eau les deux composants du mélange eau/éther peuvent être utilisés en toute proportion dans leur zone de miscibilité.

La concentration des sels de cobalt dans le milieu réactionnel n'est pas critique; elle peut être comprise entre 0,001 mole par litre et la limite de solubilité du sel dans le solvant ou le couple de solvant choisi à la température de la réaction. De préférence cette concentration peut varier de 0,01 à 1 mole/1. On pourrait évidemment dépasser la limite de solubilité du sel de cobalt dans le milieu réactionnel choisi mais cela ne se traduirait per aucun avantage particulier.

Bien que la température à laquelle la réaction peut être conduite puisse varier dans de lages limites, on opère en général à des températures de l'ordre de 10 à 150°C et de préférence de 20 à 120°C. Des températures allant de 25 à 75°C conviennent bien. La pression absolue d'oxyde de carbone peut être comprise entre 1 et 150 bars de CO, et de préférence entre 2 et 50 bars. Toutefois comme cela a été exposé auparavant, la mise en oeuvre du procédé ne dépend pas de la mise en oeuvre de pressions élevées et dans la pratique il n'est pas nécessaire de recourir à des pressions supérieures à 20 bars pour assurer un bon déroulement de la réaction.

Le procédé selon l'invention est particulièrement simple à mettre en oeuvre au plan pratique puisqu'il suffit de charger dans un appareil résistant à la pression, purgé à l'oxyde de carbone, de l'eau, et/ou un éther, et/ou un alcool, un sel de cobalt, la base minérale et un ou plusieurs composés soufrés puis d'établir la pression d'oxyde de carbone adéquate et de maintenir le milieu réactionnel sous agitation à la température choisie pendant un temps suffisant pour assurer une bonne absorption de l'oxyde de carbone. Des durées de l'ordre de 1 à 5 heures sont en général suffisantes, dans les conditions optimales, pour assurer un bon rendement en cobalttétracarbonylate alcalino-terreux.

Les solutions de cobalttétracarbonylates alcalino-terreux obtenues par le présent procédé peuvent être utilisées directement pour la réalisation de réaction de carbonylation. En particulier, en raison de leur composition, elles conviennent tout particulièrement bien à la carbonylation de composés aliphatiques ou aromatiques à groupes halométhyle en les acides carboxyliques correspondants ou leurs dérivés (sels alcalins ou alcalino-terreux ou esters). Elles s'appliquent tout spécialenant bien à la mise en oeuvre des procédés de carbonylation des composés à groupe halométhyle décrits dans les brevets et demandes de brevet français No. 1.313.360; No. 70/26.593; No. 75/0.0533 et son addition No. 75/29.459; No. 79/16.170; No. 75/07.980 et dans le brevet américain No. 4.351.952. En pareil cas on peut enchaîner sans difficulté l'étape de préparation des solutions de cobalttétracarbonylates alcalino-terreux et celle de carbonylation des composés à groupes

halométhyles. L'emploi des solutions de cobalttétracarbonylates alcalino-terreux obtenues par le présent procédé à la carbonylation des compsés à groupes halométhyles en acides carboxyliques ou leurs dérivés constitue un autre objet de la présente invention. Dans ce cas les conditions de la phase de carbonylation sont celles décrites dans les brevets et demandes de brevets français précités.

Le procédé selon l'invention convient tout particulièrement à la préparation de solutions catalytiques destinées à la carbonylation des halogénures d'arylméthyle en acides arylpyruviques et leurs dérivés selon le procédé décrit dans le brevet français No. 75/0.0533 et son addition No. 75/29.459 et selon le brevet américain No. 4.351.952. La combinaison du procédé d'obtention des cobalttétracarbonylates alcalino-terreux décrit ci-avant avec le procédé de préparation des acides arylpyruviques par carbonylation des halogénures d'arylméthyle constitue un autre objet de la présente invention.

Plus spécifiquement la présente invention a encore pour objet un procédé de préparation d'acides arylpyruviques par réaction d'halogénures d'arylméthyle avec de l'oxyde de carbone, dans un milieu constitué par l'eau, un alcool, un éther ou un mélange d'eau et d'un alcool ou d'un éther en présence d'une base minérale alcalino-terreuse et d'une quantité catalytique d'un cobalttétracarbonylate alcalino-terreux caractérisé en ce que ce dernier est obtenu dans une première étape par réaction d'un dérivé du cobalt (+2) avec l'oxyde de carbone en présence d'une base minérale prise dans le groupe formé par les hydroxydes alcalino-terreux et d'au moins un dérivé du soufre qui comporte au moins un atome de soufre dont le degré d'oxydation est inférieur ou égal à + 3, dans un milieu constitué par l'eau, un alcool, un éther ou un mélange d'eau et d'un alcool ou d'un éther.

La combinaison de la phase de préparation des cobalttétracarbonylates alcalino-terreux et de la phase de carbonylation des halogénures d'arylméthyle est rendue aisée par la similitude des conditions de mise en oeuvre de ces deux phases. En général il est suffisant d'ajouter aux solutions de cobalttétracarbonylates alcalino-terreux l'halogénure d'arylméthyle, une quantité adéquate de base minérale alcalino-terreuse et le cas échéant un solvant qui peut être identique à celui utilisé dans la phase de préparation du catalyseur ou en être différent, puis d'appliquer au milieu ainsi obtenu une pression convenable d'oxyde de carbone. De préférence on fait appel aux mêmes solvants pour les phases de préparation du catalyseur et de carbonylation de sorte qu'il suffit d'ajouter si nécessaire à la solution résultant de la première phase une quantité adéquate d'eau et/ou d'un alcool et/ou d'éther.

Les conditions réactionnelles de la phase de carbonylation sont en général celles décrites dans le brevet français No. 75/0.0533 et son addition No. 75/29.459 ou le brevet américain No. 4.351.952.

Plus précisément le procédé selon l'invention s'applique à la carbonylation d'halogénures d'arylméthyle de formule générale:

$(R)_n\ A\ CH_2X$ (I)

dans laquelle:

- A représente un radical hydrocarboné aromatique comportant 1 ou 2 noyaux benzéniques condensés;
- le ou les substituants R qui peuvent être identiques ou différents representent un radical alkyle, linéaire ou ramifié, ayant de 1 à 4 atomes de carbone tel que par exemple un radical méthyle, éthyle, propyle, isopropyle, butyle (éventuellement substitué par un groupe nitro, ou par un radical alkoxy comportant de 1 à 4 atomes de carbone, comme un radical méthoxy, éthoxy, propoxy, butoxy); un radical alkoxy tel que ceux définis ci-dessus; un atome d'halogène comme un atome de fluor, chlore, brome ou iode; un groupe fonctionnel comme un groupe nitrile, nitro ou alkylcarbonyloxy;
- n représente un nombre entier allant:
  a) de 0 à 3 dans le cas où A comporte un noyau bezènique,
  b) de 0 à 5 dans le cas où A comporte deux noyaux benzéniques condensés.

Comme halogénures d'arylméthyle de formule (I) auxquels on fait appel de préférence pour mettre en oeuvre le procédé selon l'invention, on peut citer ceux dans lesquels:

- R représente un radical alkyle tel que méthyle et éthyle; un atome de fluor, de chlore, de brome ou d'iode;
- n représente un nombre entier allant:
  a) de 0 à 2 dans le cas où A comporte un noyau benzénique,
  b) de 0 à 3 dans le cas où A comporte deux noyaux benzéniques condensés;
- X représente un atome de chlore ou de brome.

A titre d'exemples spécifiques d'halogénures de formule (I) qui conviennent à la présente invention, on citera: les chlorure ou bromure de benzyle, les chlorures ou bromures d'ortho-, de méta- ou de paraméthylbenzyle, de diméthyl-2,3 benzyle, de diméthyl-2,4 benzyle, de diméthyl-3,5 benzyle, d'ortho-, de méta- ou de parafluorobenzyle, d'ortho-, de méta- ou de parachlorobenzyle, d'ortho-, de méta- ou de parabromobenzyle; le chlorométhyl-1 naphtalène, le chlorométhyl-2 naphtalène, le bromométhyl-1 naphtalène, le bromométhyl-2 naphtalène, le chlorométhyl-1 méthyl-4 naphtalène, le bromométhyl-1 méthyl-5 naphtalène, le chlorométhyl-1 triméthyl-2,3,4 naphtalène, le fluoro-1 bromométhyl-2 naphtalène, le méthyl-1 bromométhyl-2 fluoro-4 naphtalène.

En ce qui concerne la base minérale alcalino-terreuse mise en oeuvre à la phase de carbonylation, il peut s'agir indifféremnent d'un hydroxyde, d'un oxyde ou d'un carbonate de métal alcalino-terreux. Comme exemples d'agents basiques appropriés, on citera: $Ca(OH)_2$; CaO; $CaCO_3$; $Ba(OH)_2$; BaO; $BaCO_3$; $Sr(OH)_2$; SrO; $SrCO_3$; $Mg(OH)_2$; MgO; $MgCO_3$. Les hydroxydes de calcium, de baryum et de strontium conviennent

particulièrement bien. On utilise de préférence l'hydroxyde de calcium pour les deux phases du procédé.

La quantité d'agent basique utilisée peut varier dans de larges limites. On fait appel en général à une quantité qui est d'au moins une mole par mole d'halogénure d'arylméthyle de formule (I) engagé; de préférence on opère avec une quantité supérieure à cette valeur, par exemple de l'ordre de 1,1 à 4 moles de base par mole d'halogénure d'arylméthyle. La quantité de cobalttétracarbonylates alcalins ou alcalino-terreux employée pour catalyser la réaction, exprimée en nombre d'atome-gramme de cobalt par mole d'halogénure d'arylméthyle, peut être comprise entre 0,001 et 1; plus précisément cette quantité est choisie dans l'intervalle précité de manière qu'elle apporte dans le milieu de réaction de 0,01 à 0,4 atome-gramme de métal par mole d'halogénure d'arylméthyle.

Les solvants appropriés auxquels on fait appel pour conduire la réaction sont de préférence ceux utilisés pour la préparation du catalyseur.

On fait appel de préférence aux alcanols inférieurs comportant de 1 à 4 atomes de carbone et aux éthers miscibles à l'eau et plus particulièrement ceux cités plus haut.

Le procédé de carbonylation selon la présente invention s'applique tout particulièrement bien quand la réaction est conduite au sein de mélanges eau/alcool et eau/éthers. Lorsque l'on conduit la réaction au sein d'eau et d'un alcool ou d'un éther, on utilise en général des mélanges contenant de 10 à 60 % en poids d'eau et de 90 à 40 % en poids d'alcool ou d'éther.

La concentration de l'halogénure d'arylméthyle de formule (I) mis en oeuvre dans le milieu réactionnel n'est pas critique et peut varier dans de larges limites; ainsi elle peut être comprise entre 1 et 40 % en poids, mais on pourrait sortir sans inconvénient de ces limites.

La température de la phase de carbonylation peut être comprise dans l'intervalle de 20 à 150°C et de préférence de 40 à 70°C, et la pression d'oxyde de carbone dans l'intervalle de 5 à 200 bars. En général il n'est pas nécessaire de recourir à des pressions supérieures à 50 bars. La réactions est conduite en présence d'un large excès d'oxyde de carbone.

Le milieu réactionnel peut être ensuite traité de différentes manières en vue de récupérer les produits de la carbonylation, notamment les acides arylpyruviques (produits principaux) et arylacétiques (produits secondaires). Un traitement préféré consiste à soumettre la masse réactionnelie résultant de la carbonylation, éventuellenent après dilution par l'eau et/ou un éther ou un alcool, de préférence chauffée entre 50-60°C, à une filtration de manière à séparer une partie solide renfermant un sel alcalino-terreux de l'acide arylpyruvique, d'un filtrat contenant un sel alcalino-terreux de l'acide arylacétique.

Le solide retenu sur le filtre est ensuite traité au moyen d'une solution aqueuse d'un acide minéral, comme l'acide chlorhydrique, de manière à déplacer l'acide arylpyruvique de son sel alcalino-terreux. La solution obtenue est extraite au moyen d'un solvant approprié, par exemple de l'acétate de méthyle. L'extrait organique est soumis à une distillation sous pression réduite progressivement sans dépasser 40°C dans la masse. Le résidu final est constitué par de l'acide arylpyruvique de grande pureté. L'extrait organique peut également être traité par une solution aqueuse basique de soude ou de potasse de façon à préparer le sel de sodium ou de potassium de l'acide atylpyruvique. Ce sel peut alors être récupéré très pur à partir de la solution aqueuse par simple évaporation sous pression réduite par exemple.

Le filtrat réactionnel peut être traité, le cas échant, pour récupérer l'acide arylacétique qu'il contient. Par exemple, on peut le débarrasser de l'eau et du solvant organique et éventuellement de l'halogénure d'arylméthyle n'ayant pas réagi qu'il renferme par distillation à pression atmosphérique. Après refroidissement on acidifie à l'aide d'un acide minéral, comme l'acide chlorhydrique, puis on extrait le milieu au moyen d'un solvant convenable. L'extrait organique est ensuite lavé à l'aide d'une solution aqueuse alcaline, puis la solution aqueuse de lavage est acidifiée et extraite pour conduire, après élimination du solvant d'extraction, à un mélange résiduel contenant l'acide arylacétique.

Les exemples suivants illustrent l'invention et montrent comment elle peut être mise en pratique.

**Exemple 1**

Dans un autoclave en acier inoxydable de 500 ml de capacité, on charge:

- 4,986 g (21 mmol) de $CoCl_2$, 6 $H_2O$
- 1,379 g (5,56 mmol) de $Na_2S_2O_3$, 5 $H_2O$
- 5,95 g (80,4 mmol) de $Ca(CH)_2$
- 200 ml d'isopropanol
- 40 ml d'eau.

Après fermeture de l'autoclave on établit une pression initiale de 10 bars de monoxyde de carbone. L'agitation par un système de va et vient est mise en route et l'autoclave est porté à 50°C, en 15 minutes environ, au moyen d'un four annulaire. La pression dans l'autoclave est pendant toute la durée de l'essai.

Après 4 h 30 mn de réaction à 50°C, l'agitation et le chauffage sont arrêtés. L'autoclave est refroidi et dégazé.

On prélève une partie aliquote de masse réactionnelle pour dosage de l'ion cobalttétracarbonylate par réaction du cobalt tétracarbonylate de calcium avec l'iode et détetmination du volume d'oxyde de carbone libéré. On dose de cette façon 15,54 millimoles d'ion $Co(CO)_4^-$ dans le milieu réactionnel soit un rendement (RR)

de 74 % par rapport au chlorure de cobalt chargé.

**Exemple 2**

Préperation du catalyseur

Dans un autoclave de 3,5 litres en acier inoxydable, muni d'un agitateur, de diverses tubulures d'introduction des réactifs, et chauffé par une circulation d'huile dans une double enveloppe, on a chargé:

- 43,7 g de chlorure de cobalt hexahydraté,
- 9,4 g de thiosulfate de sodium pentahydraté,
- 1,73 g de sulfure de sodium monohydraté,
- 56 g de chaux,
- 1422 g d'isopropanol, et
- 360 g d'eau.

Le ciel du réacteur a été convenablement purgé de l'oxygène, d'abord par de l'azote puis par de l'oxyde de carbone.

Le mélange réactionnel a été porté à 50°C et on a maintenu une pression de 10 bars d'oxyde de carbone pendant une durée de 4 heures. Durant cette période on a noté une consommation de 21,1 g d'oxyde de carbone.

Après détente et refroidissement, ce mélange a été dilué avec 470 g d'isopropanol et 120 g d'eau. L'ion cobalttétracarbonyle est dosé comme à l'exemple 1. On constate que la masse réactionnelle contient 0,15 ion $Co(CO)_4^-$ ce qui représente un rendement de 81,6 % par rapport au chlorure de cobalt chargé.

Réaction de double carbonylation du chlorure de benzyle

Dans le réacteur décrit ci-dessus, on conserve 693 g de la solution catalytique, ce qui correspond à 0,042 ion-g de $Co(CO)_4^-$ (le reste de la solution est transféré dans un récipient de stockage purgé à l'oxyde de carbone et maintenu sous une légère surpression de CO), puis on charge 244 g de chlorure de benzyle, 222 g de chaux, 685 g d'isopropanol et 150 g d'eau.

Après les purges convenables, le mélange a été porté à 60°C et maintenu sous une pression d'oxyde de carbone de 5 bars pendant une durée de 3 heures. Pendant cette période on a enregistré une consommation de 89,5 g d'oxyde de carbone correspondant à 1,66 mole par mole de chlorure de benzyle. L'autoclave est dégazé puis le précipité obtenu est séparé par filtration, lavé et séché. On a ainsi obtenu 402,2 g d'un produit brut contenant, par dosage, 77,6 % de phénylpyruvate de calcium, ce qui correspond à un rendement de 80,2 % par rapport au chlorure de benzyle engagé.

Après 1000 heures de stockage de la solution catalytique, comme il a été indiqué plus haut, on a fait un nouvel essai en chargeant les mêmes quantités de chlorure de benzyle et de chaux que ci-dessus, 737 g d'isopropanol, 151 g d'eau et 530 g de la solution catalytique. La quantité d'espèce catalytique active était de 0,036 ion-g de $Co(CO)_4^-$. Le mélange a été porté à 60°C et maintenu 4 heures sous une pression de 5 bars d'oxyde de carbone. Pendant cette période, la consommation en oxyde de carbone a été de 86,2 g correspondant à 1,60 mole par mole de chlorure de benzyle.

Le précipité obtenu, traité de la même façon, pesait 441,6 g et contenait, par dosage, 71,4 % de phénylpyruvate de calcium, ce qui correspond à un rendement de 81 % par rapport au chlorure de benzyle engagé.

**Exemples 3 à 19**

On a opéré selon le mode opératoire et dans l'appareillage décrit à l'exemple 1 en faisant varier les conditions et la nature des produits intervenant dans la réaction. Les résultats figurent dans le tableau suivant:

| EXEMPLES | SEL DE COBALT | | DERIVE SOUFRE | | BASE | | SOLVANT | | EAU ml | T°C | P bars | DUREE h | RENDEMENTS |
|---|---|---|---|---|---|---|---|---|---|---|---|---|---|
| | Nature | Quantité m.mole | Nature | Quantité m.mole | Nature | Quantité m.mole | Nature | Quantité ml | | | | | |
| 3 | $CoCl_2$, 6 $H_2O$ | 21 | $Na_2S_2O_3$, 5 $H_2O$ | 10 | $Ca(OH)_2$ | 81 | isopropanol | 200 | 40 | 50 | 10 | 4 | 73 % |
| 4 | $CoCl_2$, 6 $H_2O$ | 21 | $Na_2S_2O_3$, 5 $H_2O$ | 1,5 | $Ca(OH)_2$ | 81 | isopropanol | 200 | 40 | 50 | 10 | 7 | 55 % |
| 5 | $CoCl_2$, 6 $H_2O$ | 21 | $Na_2S$, 9 $H_2O$ | 5,04 | $Ca(OH)_2$ | 80 | isopropanol | 200 | 40 | 50 | 10 | 2H20 | 80 % |
| 6 | $CoCl_2$, 6 $H_2O$ | 21 | $Na_2S_4O_6$, 2 $H_2O$ | 5,3 | $Ca(OH)_2$ | 80 | isopropanol | 200 | 40 | 50 | 10 | 2h40 | 70 % |
| 7 | $CoCl_2$, 6 $H_2O$ | 21 | $Na_2S_2O_4$ | 5,17 | $Ca(OH)_2$ | 80 | isopropanol | 200 | 40 | 50 | 10 | 15 h | 94 % |
| 8 | $CoCl_2$, 6 $H_2O$ | 21 | $Na_2S_2O_3$, 5 $H_2O$<br>+<br>$Na_2S,9H_2O$ | 5,4<br>0,21 | $Ca(OH)_2$ | 80 | isopropanol | 200 | 40 | 50 | 10 | 4h15 | 78 % |
| 9 | $CoCl_2$, 6 $H_2O$ | 21 | $Na_2S_2O_3$, 5 $H_2O$<br>+<br>$Na_2S,9H_2O$ | 10<br>0,7 | $Ca(OH)_2$ | 80 | isopropanol | 200 | 40 | 50 | 10 | 3h20 | 71 % |

| EXEMPLES | SEL DE COBALT | | DERIVE SOUFRE | | BASE | | SOLVANT | | EAU | °C | P | DUREE | RENDEMENTS |
|---|---|---|---|---|---|---|---|---|---|---|---|---|---|
| | Nature | Quantité m.mole | Nature | Quantité m.mole | Nature | Quantité m.mole | Nature | Quantité ml | ml | | bars | h | |
| 10 | $CoCl_2$, 6 $H_2O$ | 21 | $Na_2S_2O_3$, 5 $H_2O$ + $Na_2S$, 9$H_2O$ | 5,2<br>0,4 | NaOH | 80 | isopropanol | 200 | 40 | 50 | 10 | 2 h | 38 % |
| 11 | $CoCl_2$, 6 $H_2O$ | 21 | $Na_2S_2O_3$, 5 $H_2O$ + $Na_2S$, 9$H_2O$ | 5,67<br>0,37 | $Ca(OH)_2$ | 81 | isopropanol | 160 | 80 | 100 | 10 | 1h20 | 83 % |
| 12 | $CoCl_2$, 6 $H_2O$ | 21 | $Na_2S_2O_3$, 5 $H_2O$ | 5,7 | $Ca(OH)_2$ | 81 | méthanol | 240 | - | 50 | 10 | 27 h | 65 % |
| 13 | $CoSO_4$ 7 $H_2O$ | 19,6 | $Na_2S_2O_3$, 5 $H_2O$ + $Na_2S$, 9$H_2O$ | 5,8<br>1,1 | $Ca(OH)_2$ | 81 | isopropanol | 200 | 40 | 50 | 10 | 24 h | 60 % |
| 14 | $Co(OAc)_2$ 4 $H_2O$ | 19,6 | $Na_2S_2O_3$, 5 $H_2O$ + $Na_2S$, 9$H_2O$ | 5,4<br>0,55 | $Ca(OH)_2$ | 81 | isopropanol | 200 | 40 | 50 | 10 | 4h20 | 85 % |

| EXEMPLES | SEL DE COBALT | | DERIVE SOUFRE | | BASE | | SOLVANT | | EAU ml | °C | P bars | DUREE h | RENDEMENTS |
|---|---|---|---|---|---|---|---|---|---|---|---|---|---|
| | Nature | Quantité m.mole | Nature | Quantité m.mole | Nature | Quantité m.mole | Nature | Quantité ml | | | | | |
| 15 | $CoCl_2$, 6 $H_2O$ | 10 | $Na_2S_2O_3$, 5 $H_2O$ + $Na_2S$,9$H_2O$ | 2,1<br>0,4 | $Ca(OH)_2$ | 40 | isopropanol | 100 | 20 | 50 | 10 | 4h30 | 68 % |
| 16 | $CoCl_2$, 6 $H_2O$ | 21 | $Na_2S_2O_3$, 5 $H_2O$ + $Na_2S$,9$H_2O$ | 5,1<br>0,51 | $Ca(OH)_2$ | 77 | $CH_3OH$ | 120 | 120 | 50 | 10 | 20 h | 94 % |
| 17 | $CoCl_2$, 6 $H_2O$ | 21 | $Na_2S_2O_3$, 5 $H_2O$ + $Na_2S$,9$H_2O$ | 5,3<br>0,52 | $Ca(OH)_2$ | 79 | isopropanol | 200 | 40 | 70 | 23 | 2h30 | 85 % |
| 18 | $CoCl_2$, 6 $H_2O$ | 21 | $Na_2S_2O_3$, 5 $H_2O$ + $Na_2S$,9$H_2O$ | 5,2<br>0,63 | $Ca(OH)_2$ | 80 | isopropanol | 200 | 40 | 25 | 10 | 20 h | 67 % |
| 19 | $CoCl_2$, 6 $H_2O$ | 20,6 | $Na_2S_2O_3$, 5 $H_2O$ + $Na_2S$,9$H_2O$ | 5,34<br>0,89 | $Ca(OH)_2$ | 80 | isopropanol | 200 | 40 | 21 | 2 | 20 h | 73 % |

**Exemple 20**

Dans un autoclave en acier inoxydable de 500 ml de capacité, on charge:
- 4,986 g (21 mmol) de $CoCl_2$, 6 $H_2O$
- 1,411 g (5,7 mmol) de $Na_2S_2O_3$, 5 $H_2O$
- 7,98 g (107,8 mmol) de $Ca(OH)_2$
- 200 ml de dioxanne
- 40 ml d'eau.

Après fermeture de l'autoclave on établit une pression initiale de 10 bars de monoxyde de carbone. L'agitation par un système de va et vient est mise en route et l'autoclave est porté à 50°C, en 15 minutes environ, au moyen d'un four annulaire. La pression dans l'autoclave est alors de 11 bars. Elle est ensuite maintenue égale à 10 bars environ pendant toute la durée de l'essai.

Après 24 h de réaction à 50°C, l'agitation et le chauffage sont arrêtés. L'autoclave est refroidi et dégazé.

On prélève une partie aliquote de masse réactionnelle pour dosage de l'ion cobalttétracarbonylate par réaction du cobalt tétracarbonylate de calcium avec l'iode et détermination du volume d'oxyde de carbone libéré. On dose de cette façon 12,6 millimoles d'ion $Co(CO)_4^-$ dans le milieu réactionnel soit un rendement (RR) de 60 % par rapport au chlorure de cobalt chargé.

**Revendications**

1. Procédé de préparation des cobalttétracarbonylates alcalino-terreux par réaction en milieu liquide d'un dérivé du cobalt (+2) avec l'oxyde de carbone en présence d'une base minérale caractérisé en ce ue la base minérale est prise dans le groupe formé par les hydroxydes et les bicarbonates alcalino-terreux et que l'on opère en présence d'au moins un dérivé du soufre qui comporte au moins un atome de soufre dont le degré d'oxydation est inférieur ou égal à + 3 dans un milieu constitué par l'eau, un alcool, un éther ou un mélange d'eau et d'un alcool ou d'un éther.

2. Procédé selon la revendication 1, caractérisé en ce que le dérivé du cobalt (+2) est un sel d'un acide minéral ou carboxylique.

3. Procédé selon la revendication 2, caractérisé en ce que le sel de cobalt est un halogénure, un nitrate, un sulfate ou l'acétate de cobalt.

4. Procédé selon l'une quelconque des revendications 1 à 3, caractérisé en ce que le dérivé soufré est un sulfure, un polysulfure, un thiosulfate, un dithionite, un polythionate, un mercaptan.

5. Procédé selon la revendication 4, caractérisé en ce que le dérivé du soufre est un sulfure, un thiosulfate, un dithionite, un polythionate alcalin ou alcalino-terreux.

6. Procédé selon la revendication 5, caractérisé en ce que le dérivé du soufre est le sulfure de sodium, le thiosulfate de sodium, le dithionite de sodium, le tétrathionate de sodium.

7. Procédé selon l'une quelconque des revendications 1 à 6, caractérisé en ce que la base minérale est l'hydroxyde de calcium.

8. Procédé selon l'une quelconque des revendications 1 à 7, caractérisé en ce que l'on utilise comme alcool le méthanol, l'éthanol, l'isopropanol, le t-butanol.

9. Procédé selon l'une quelconque des revendications 1 à 7, caractérisé en ce que l'on utilise comme solvant un éther miscible à l'eau.

10. Procédé selon la revendication 9, caractérisé en ce que l'éther est choisi dans le groupe formé par l'oxyde de méthyle, l'oxyde de méthyle et de t-butyle, l'oxyde d'éthyle et de propyle, l'oxyde de méthyle et d'éthyle, l'oxyde de méthyle et de propyle, le diméthoxy-1,2 éthane, l'éther monométhylique du diéthylèneglycol, l'éther monoéthylique du diéthylèneglycol, l'éther monobutylique du diéthylèneglycol, l'éther diéthylique du diéthylèneglycol, le dioxanne et le THF.

11. Procédé selon l'une quelconque des revendications 1 à 10, caractérisé en ce que la quantité de dérivé soufré exprimée en mole par atome-gramme de cobalt est comprise dans l'intervalle de 0,01 à 1 mole.

12. Procédé selon l'une quelconque des revendications 1 à 11, caractérisé en ce que la quantité de base alcalino-terreuse est au moins voisine de la quantité stoechiométrique.

13. Procédé selon l'une quelconque des revendications 1 à 12, caractérisé en ce que la température est comprise dans un intervalle de 10 à 150°C.

14. Procédé selon l'une quelconque des revendications 1 à 13, caractérisé en ce que la pression d'oxyde de carbone est supérieure ou égale à 1 bar.

15. Procédé de préparation d'acides arylpyruviques par réaction d'halogénures d'arylméthyle avec de l'oxyde de carbone, dans un milieu constitué par l'eau, un alcool, un éther ou un mélange d'eau et d'un alcool ou d'un éther en présence d'une base minérale alcalino-terreuse et d'une quantité catalytique d'un cobalttétracarbonylate alcalino-terreux caractérisé en ce que ce dernier est obtenu dans une première étape par réaction d'un dérivé du cobalt (+2) avec l'oxyde de carbone en présence d'une base minérale prise dans le groupe formé par les hydroxydes alcalino-terreux et d'au moins un dérivé du soufre qui comporte au moins un atome de soufre dont le degré d'oxydation est inférieur ou égal à + 3, dans un milieu constitué par l'eau, un alcool, un éther ou un mélange d'eau et d'un alcool ou d'un éther puis, dans une deuxième étape, que l'on

procède à la carbonylation après addition à la masse réactionnelle de la première étape d'un halogénure de benzyle, d'une quantité adéquate de base alcalino-terreuse et le cas échéant de solvant.

16. Procédé selon la revendication 15, caractérisé en ce que l'alcool utilisé pour la préparation du catalyseur et à l'étape de carbonylation est un alcanol inférieur.

17. Procédé selon la revendication 15, caractérisé en ce que l'alcool utilisé pour la préparation du catalyseur et à l'étape de carbonylation est l'isopropanol et la base est l'hydroxyde de calcium.

18. Procédé selon la revendication 15, caractérisé en ce que l'éther utilisé pour la préparation du catalyseur et à l'étape de carbonylation est un éther miscible à l'eau.

**Patentansprüche**

1. Verfahren zur Herstellung von Erdalkalikobalttetracarbonylaten durch Reaktion einer Kobalt ($^{+}2$)-Verbindung mit Kohlenmonoxid in flüssigem Medium in Gegenwart einer Mineralbase, dadurch gekennzeichnet, daß die Mineralbase ausgewählt wird aus der Gruppe bestehend aus den Hydroxiden und den Bicarbonaten der Erdalkalimetalle und daß man in Gegenwart mindestens einer Schwefelverbindung arbeitet, die mindestens ein Schwefelatom enthält, dessen Oxydationsstufe kleiner oder gleich + 3 ist in einem Medium bestehend aus Wasser, einem Alkohol, einem Ether oder einer Mischung von Wasser und einem Alkohol oder einem Ether.

2. Verfahren nach Anspruch 1, dadurch gekennzeichnet, daß die Kobalt ($^{+}2$)-Verbindung ein Salz einer Mineralsäure oder Carbonsäure ist.

3. Verfahren nach Anspruch 2, dadurch gekennzeichnet, daß das Kobaltsalz ein Halogenid, ein Nitrat, ein Sulfat oder Kobaltacetat ist.

4. Verfahren nach einem der Ansprüche 1 bis 3, dadurch gekennzeichnet, daß die Schwefelverbindung ein Sulfid, ein Polysulfid, ein Thiosulfat, ein Dithionit, ein Polythionat oder ein Mercaptan ist.

5. Verfahren nach Anspruch 4, dadurch gekennzeichnet, daß die Schwefelverbindung ein Sulfid, ein Thiosulfat, ein Dithionit oder ein Polythionat eines Alkali- oder Erdalkalimetalls ist.

6. Verfahren nach Anspruch 5, dadurch gekennzeichnet, daß die Schwefelverbindung Natriumsulfid, Natriumthiosulfat, Natriumdithionit oder Natriumtetrathionat ist.

7. Verfahren nach einem der Ansprüche 1 bis 6, dadurch gekennzeichnet, daß die Mineralbase Calciumhydroxid ist.

8. Verfahren nach einem der Ansprüche 1 bis 7, dadurch gekennzeichnet, daß man als Alkohol Methanol, Ethanol, Isopropanol oder tertiär-Butanol verwendet.

9. Verfahren nach einem der Ansprüche 1 bis 7, dadurch gekennzeichnet, daß man als Solvens einen mit Wasser mischbaren Ether verwendet.

10. Verfahren nach Anspruch 9, dadurch gekennzeichnet, daß der Ether ausgewählt wird aus der Gruppe bestehend aus Dimethylether, Methyl-tert.-butylether, Ethylpropylether, Methylethylether, Methylpropylether, 1,2-Dimethoxyethan, Diethylenglykolmonomethylether, Diethylenglykolmonoethylether, Diethylenglykolmonobutylether, Diethylenglykoldiethylether, Dioxan und THF.

11. Verfahren nach einem der Ansprüche 1 bis 10, dadurch gekennzeichnet, daß die Menge der Schwefelverbindung ausgedrückt in Mol pro Gramm-Atom Kobalt zwischen 0,01 und 1 Mol beträgt.

12. Verfahren nach einem der Ansprüche 1 bis 11, dadurch gekennzeichnet, daß die Menge der Erdalkalibase wenigstens in etwa der stöchiometrischen Menge entspricht.

13. Verfahren nach einem der Ansprüche 1 bis 12, dadurch gekennzeichnet, daß die Temperatur im Bereich zwischen 10° und 150°C liegt.

14. Verfahren nach einem der Ansprüche 1 bis 13, dadurch gekennzeichnet, daß der Druck des Kohlenmonoxids gleich oder größer 1 bar ist.

15. Verfahren zur Herstellung von Arylbrenztraubensäuren durch Reaktion von Arylmethylhalogeniden mit Kohlenmonoxid in einem Medium bestehend aus Wasser, einem Alkohol, einem Ether oder einer Mischung von Wasser und einem Alkohol oder einem Ether in Gegenwart einer Mineralbase eines Erdalkalimetalls und einer katalytischen Menge eines Erdalkalikobalttetracarbonylats, dadurch gekennzeichnet, daß letzteres erhalten wird in einem ersten Schritt durch Reaktion einer Kobalt(+2)-Verbindung mit Kohlenmonoxid in Gegenwart einer Mineralbase aus der Gruppe bestehend aus den Erdalkalihydroxiden und mindestens einer Schwefelverbindung, die mindestens ein Schwefelatom enthält, dessen Oxydationsstufe kleiner oder gleich + 3 ist, in einem Milieu bestehend aus Wasser, einem Alkohol, einem Ether oder einer Mischung von Wasser und einem Alkohol oder einem Ether und einem anschließenden zweiten Schritt, in dem man die Carbonylierung vornimmt nach Zugabe eines Benzylhalogenids, einer adäquaten Menge einer Base eines Erdalkalimetalls und gegebenenfalls eines Lösungsmittels zu der im ersten Schritt erhaltenen Reaktionsmischung.

16. Verfahren nach Anspruch 15, dadurch gekennzeichnet, daß der für die Herstellung des Katalysators und beim Carbonylierungsschritt verwendete Alkohol ein niederes Alkanol ist.

17. Verfahren nach Anspruch 15, dadurch gekennzeichnet, daß der für die Herstellung des Katalysators und im Carbonylierungsschritt verwendete Alkohol Isopropanol ist und daß die Base Calciumhydroxid ist.

18. Verfahren nach Anspruch 15, dadurch gekennzeichnet, daß der für die Herstellung des Katalysators und

im Carbonylierungsschritt verwendete Ether ein mit Wasser mischbarer Ether ist.

## Claims

1. Process for the preparation of alkaline earth metal cobalttetracarbonylates by reacting in a liquid medium, a cobalt (+2) derivative with carbon monoxide, in the presence of an inorganic base, characterized in that the inorganic base is taken from the group consisting of alkaline earth metal hydroxides and bicarbonates and that the reaction is carried out in the presence of at least one sulphur derivative which contains et least one sulphuratom the degree of oxidation of which is less than or equal to + 3 in a medium which consists of water, an alcohol, an ether or amixture of water and an alcohol or an ether.

2. Process according to CLaim 1, characterized in that th cobalt (+2) derivate is a satl of an inorganic or carboxylic acid.

3. Process according to Claim 2, characterized in that the cobalt salt is a halide, a nitrate, a sulphate or acetate of cobalt.

4. Process according to any one of Claims 1 to 3, characterized in that the sulphur derivative is a sulphide, a polysulphide, a thiosulphate, a dithionite, a polythionate or a mercaptan.

5. Process according to Claim 4, characterized in that the sulphur derivative is a sulphide, a thiosulphate, a dithionite or an alkali metal or alkaline earth metal polythionate.

6. Process according to Claim 5, characterized in that the sulphur derivative is sodium sulphide, sodium thiosulphate, sodium dithionite or sodium tetrathionate.

7. Process according to any one of Claims 1 to 6, characterized in that the inorganic base is calcium hydroxide.

8. Process according to any one of Claims 1 to 7, characterized in that methanol, ethanol, isopropanol or tert-butanol is used as the alcohol.

9. Process according to any one of Claims 1 to 7, characterized in that a water-miscible ether is used as the solvent.

10. Process according to Claim 9, characterized in that the ether is chosen from the group consisting of methyl ether, methyl tert-butyl ether, ethyl propyl ether, methyl ethyl ether, methyl propyl ether, 1,2-dimethoxy ethane, monomethyl ether or diethylene glycol, monoethyl ether of diethylene glycol, monobutyl ether of diethylene glycol, diethyl ether of diethylene glycol, dioxane and THF.

11. Process according to any one of Claims 1 to 10, characterized in that the quantity of the sulphur derivative expressed in mols per gramme-atom of cobalt is within the range of from 0.01 to 1 mol.

12. Process according to any one of Claims 1 to 11, characterized in that the quantity of the alkaline earth metal base is at least in the vicinity of the stoichiometric quantity.

13. Process according to any one of Claims 1 to 12, characterized in that the temperature is within a range of 10 to 150°C.

14. Process according to any one of Claims 1 to 13, characterized in that the carbon monoxide pressure is greater than or equal to 1 bar.

15. Process for the preparation of arylpyruvic acids by reacting arylmethyl halides with carbon monoxide, in a medium consisting of water, an alcohol, an ether or a mixture of water and an alcohol or an ether, in the presence of an alkaline earth metal inorganic base and a catalytic quantity of an alkaline earth metal cobalt tetracarbonylate, characterized in that the latter is obtained, in a first stage, by reacting a cobalt (+2) derivative with carbon monoxide in the presence of ar inorganic base taken from the group consisting of alkaline earth metal hydroxides and at least one sulphur derivative which contains at least one sulphur atom, the degree of oxidation of which is less than or equal to + 3, in medium consisting of water, an alcohol, an ether or a mixture of water and an alcohol or an ether and then, in a second stage, carbonylation is carried out after adding, to the reaction mass from the first stage, a benzyl halide, an adequate quantity of alkaline earth metal base and, where appropriate, solvent.

16. Process according to Claim 15, characterized in that the alcohol used for the preparation of the catalyst and in the carbonylation stage is a lower alkanol.

17. Process according to Claim 15, characterized in that the alcohol used for the preparation of the catalyst and in the carbonylation stage is isopropanol and the base is calcium hydroxide.

18. Process according to Claim 15, characterized in that the ether used for the preparation of the catalyst and in the carbonylation stage is a water-miscible ether.